# EUROPEAN PATENT APPLICATION

(11) **EP 4 678 894 A2**
(43) Date of publication of application: **14.01.2026**
(21) Application number: 25189390.5
(22) Date of filing: 14.07.2025
(51) Int. Cl.: F02C 3/22, F02C 7/224

(54) **MULTIPLE HEAT SOURCE CRYOGENIC BOTTOMING CYCLE SEQUENCING AND ROUTING**

(30) Priority: 12.07.2024 US 202418770830
(71) Applicant: RTX Corporation, Farmington, CT 06032 (US)
(72) Inventor: EVANS, Brandon M., Farmington, 06032 (US); TERWILLIGER, Neil J., Farmington, 06032 (US)
(74) Representative: Dehns

(57) **Abstract**

An aircraft propulsion system (25) includes a primary energy conversion device (36) that uses a cryogenic fuel and air to generate power and thermal energy (45). The primary energy conversion device is mounted to a first structure (26) of an aircraft (20). A bottoming cycle (52) includes a working fluid (64) that is circulated within a closed circuit (62) that includes a bottoming compressor section (54) and a bottoming turbine section (56). At least a portion of the bottoming cycle is mounted to a second structure (22, 24) of the aircraft that is different from the first structure. A primary heat exchanger (50) provides communication of the thermal energy from the primary conversion device to the working fluid of the bottoming cycle and is mounted within the first structure of the aircraft proximate the primary energy conversion device.

## Description

### TECHNICAL FIELD

The present invention relates generally to a bottom cycle for an aircraft propulsion system and more specifically to a bottoming cycle that utilizes a cryogenic fuel as a heat sink.

### BACKGROUND OF THE INVENTION

Gas turbine engines typically include a compressor where inlet air is compressed and delivered into a combustor. In the combustor, the compressed air is mixed with fuel and ignited to generate an exhaust gas flow. The exhaust flow is expanded through a turbine section to generate shaft power used to drive the compressor and a propulsive fan. Some energy in the high energy exhaust flow is recovered as it is expanded through a turbine section. However, a large amount of energy in the form of heat is simply exhausted from the turbine section to the atmosphere. A bottoming cycle utilizes recovered heat to generate additional useful work. A working fluid in the bottoming cycle is heated to drive a secondary turbine to generate additional shaft power. The working fluid in the bottoming cycle is then cooled, compressed, and reheated before expansion back through the turbine. The capability of the working fluid to accept heat limits energy recovery of the bottoming cycle.

### SUMMARY OF THE INVENTION

An aircraft propulsion system according to an aspect of the invention, among other possible things, includes a primary energy conversion device that uses a cryogenic fuel and air to generate power and thermal energy, the primary energy conversion device is mounted to a first structure of an aircraft, a bottoming cycle where a working fluid is circulated within a closed circuit (i.e., the bottoming cycle is configured to circulate a working fluid within the closed circuit) that includes a bottoming compressor section and a bottoming turbine section, the working fluid is compressed in the bottoming compressor section (i.e., the bottoming compressor section is configured to compress the working fluid) and expanded through the bottoming turbine section to generate shaft power (i.e., the bottoming turbine section is configured to expand the working fluid therethrough to generate shaft power), at least a portion of the bottoming cycle is mounted to a second structure of the aircraft that is different from the first structure, a primary heat exchanger that provides communication of thermal energy from the primary conversion device to the working fluid of the bottoming cycle, the primary heat exchanger is mounted within the first structure of the aircraft proximate the primary energy conversion device, a fuel system that includes a cryogenic fuel storage tank and a fuel flow path for routing the cryogenic fuel to the energy conversion device, and a fuel/working fluid heat exchanger that provides thermal communication between the cryogenic fuel and the working fluid to cool the working fluid flow from the bottoming turbine to the bottoming compressor.

In any of the aspects or embodiments described above and herein, the primary energy conversion device may comprise a core engine comprising a compressor, a combustor, and a turbine. The combustor may be configured to ignite a mixture of the cryogenic fuel and compressed air from the compressor to generate an exhaust gas flow. The turbine may be configured to expand the exhaust gas flow to generate shaft power.

In any of the aspects or embodiments described above and herein, the primary energy conversion device may include a gas turbine engine that includes a combustor where the cryogenic fuel is mixed with compressed air and ignited to generate an exhaust gas flow (i.e., a combustor configured to ignite a mixture of the cryogenic fuel and compressed air to generate an exhaust gas flow), and the exhaust gas flow is expanded through a turbine section to generate shaft power that is utilized to drive a propulsive fan (i.e., a turbine section configured to expand the exhaust gas flow therethrough to generate shaft power utilized to drive a propulsive fan). The exhaust gas may be routed through the primary heat exchanger for heating the working fluid of the bottoming cycle.

In any of the aspects or embodiments described above and herein, the closed circuit may communicate the working fluid flow from the bottoming cycle to the primary heat exchanger that is mounted within the first structure.

In any of the aspects or embodiments described above and herein, the second structure may include a portion of at least one of an aircraft wing, pylon, or fuselage.

In any of the aspects or embodiments described above and herein, the second structure may include an engine nacelle that surrounds a portion of the propulsion system.

In any of the aspects or embodiments described above and herein, the second structure may include a portion of a fan duct strut.

In any of the aspects or embodiments described above and herein, the bottoming turbine may be mounted within a structure different than that of the fuel/working fluid heat exchanger.

In any of the aspects or embodiments described above and herein, the bottoming compressor and the bottoming turbine may both be mounted within a structure different than that of the fuel/working fluid heat exchanger.

In any of the aspects or embodiments described above and herein, the fuel system may be mounted within the second structure with the bottoming cycle.

In any of the aspects or embodiments described above and herein, the aircraft propulsion system may further include at least one secondary heat exchanger where thermal energy from at least one secondary source is communicated into the working fluid and the secondary heat exchanger is mounted within a third structure different than both the first structure and the second structure.

In any of the aspects or embodiments described above and herein, a portion of the working fluid may be in thermal communication with a cooling flow separate from the cryogenic fuel in a supplemental heat exchanger.

In any of the aspects or embodiments described above and herein, the primary energy conversion device may include a fuel cell that uses the cryogenic fuel and air to generate electric power.

A power generating system for an aircraft according to another aspect of the invention, among other possible things, includes a core engine that includes a compressor, combustor, and turbine where a cryogenic fuel is mixed with compressed air from the compressor in the combustor and ignited to generate an exhaust gas flow that is expanded through the turbine to generate shaft power (i.e., the combustor is configured to ignite a mixture of a cryogenic fuel and compressed air from the compressor to generate an exhaust gas flow, and the turbine is configured to expand the exhaust gas flow to generate shaft power), and the core engine is mounted within a first structure of the aircraft, a bottoming cycle where a working fluid is circulated within a closed circuit (i.e., the bottoming cycle is configured to circulate a working fluid within the closed circuit) that includes a bottoming compressor section and a bottoming turbine section, the working fluid is compressed in the bottoming compressor section (i.e., the bottoming compressor section is configured to compress the working fluid) and expanded through the bottoming turbine section to generate shaft power (i.e., the bottoming turbine section is configured to expand the working fluid therethrough to generate shaft power), at least a portion of the bottoming cycle is mounted within a second structure of the aircraft that is different from the first structure, a primary heat exchanger that provides communication of thermal energy from the exhaust gas flow to the working fluid of the bottoming cycle, a fuel system that includes a cryogenic fuel storage tank and a fuel flow path for routing the cryogenic fuel to the combustor of the core engine, and a fuel/working fluid heat exchanger that provides thermal communication between the cryogenic fuel and the working fluid to cool the working fluid flow from the bottoming turbine to the bottoming compressor.

In any of the aspects or embodiments described above and herein, the closed circuit may communicate the working fluid flow from the bottoming cycle to the primary heat exchanger that is mounted within the first structure.

In any of the aspects or embodiments described above and herein, the bottoming turbine may be mounted within a structure that is different than that of the fuel/working fluid heat exchanger.

In any of the aspects or embodiments described above and herein, the bottoming compressor and the bottoming turbine may both be mounted within a structure different than that of the fuel/working fluid heat exchanger.

In any of the aspects or embodiments described above and herein, the power generation system may further include a secondary heat exchanger where thermal energy from a secondary source is communicated into the working fluid and the secondary heat exchanger is mounted within a third structure that is different than both the first structure and the second structure.

In any of the aspects or embodiments described above and herein, a portion of the closed circuit may communicate working fluid with a cooling flow that is separate from the cryogenic fuel in supplemental heat exchanger.

A method of assembling an aircraft propulsion system according to another aspect of the invention, among other possible things, includes assembling a primary energy conversion device that uses a cryogenic fuel and air to generate power and thermal energy to a first structure of an aircraft, mounting at least a portion of a bottoming cycle into a second structure of the aircraft that is different from the first structure, the bottoming cycle includes a working fluid that is circulated within a closed circuit that includes a bottoming compressor section and a bottoming turbine section, the working fluid is compressed in the bottoming compressor section and expanded through the bottoming turbine section to generate shaft power, mounting a primary heat exchanger proximate to the primary energy conversion device within the first structure, the primary heat exchanger provides communication of thermal energy from the primary conversion device to the working fluid of the bottoming cycle, the closed circuit extends between the first structure and the second structure, assembling a fuel system that includes a cryogenic fuel storage tank and a fuel flow path for routing the cryogenic fuel to the energy conversion device, and mounting a fuel/working fluid heat exchanger to provide thermal communication between the cryogenic fuel and the working fluid to cool the working fluid flow from the bottoming turbine to the bottoming compressor.

In any of the aspects or embodiments described above and herein, the method may further include mounting at least one of the bottoming turbine and the bottoming compressor to an aircraft structure different than the structure in which the fuel/working fluid heat exchanger is mounted.

In any of the aspects or embodiments described above and herein, the method may further include mounting a secondary heat exchanger to a third structure. The secondary heat exchanger may communicate thermal energy from a secondary source into the working fluid.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system including a bottoming cycle.
Figure 2 is a schematic view of an example aircraft propulsion system including a fuel cell and a bottoming cycle.
Figure 3 is a schematic view of example arrangements of a bottoming cycle system within an aircraft.
Figure 4 is a schematic view of another set of example arrangements of a bottoming cycle system within an aircraft.

### DETAILED DESCRIPTION

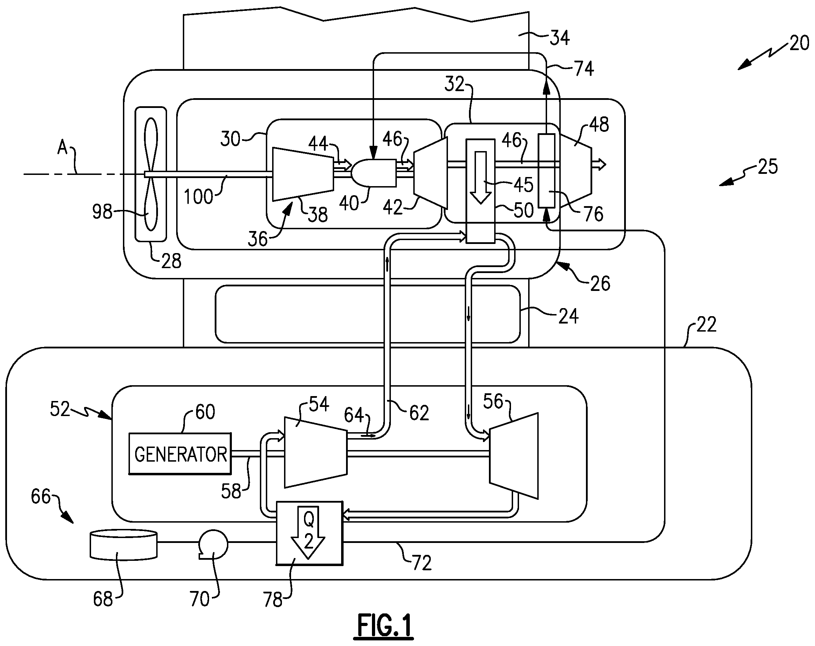

Figure 1 schematically illustrates an aircraft propulsion system 25 that includes a core engine 36 and a bottoming cycle 52 for recovering thermal energy. The bottoming cycle 52 includes a closed circuit 62 for a flow of working fluid 64. The working fluid 64 accepts thermal energy from various heat sources in the aircraft 20. The working fluid 64 provides for the communication of thermal energy from heat sources that are arranged throughout the aircraft 20. The closed circuit 62 may extend between different structures of the aircraft to provides for optimal placement of features to increase absorption capability and improve operating efficiencies.

An aircraft 20 is shown schematically and includes a fuselage 22, wing 34, and a pylon 24 structure for supporting the core engine 36. A fan case 28 surrounds a fan 98. A nacelle structure 26 at least partially surrounds the core engine 36, fan case 28 and the fan 98. The core engine 36 is supported within a core case 30. The core case 30 is attached to turbine exhaust case 32 that surrounds the hot section of the core engine 36. The features of the aircraft 20 and the propulsion system 25 are shown schematically and may be of different configurations. The propulsion system 25 includes features that provide for mounting of features of the bottoming cycle 52 in different structures of the aircraft 20. Mounting in different structures is provided by the ability of the working fluid 64 to communicate thermal energy to and from the various aircraft structures.

The example propulsion system 25 includes the core engine 36 that generates shaft power utilized to drive the propulsive fan 98. The example core engine 36 includes a compressor 38, a combustor 40 and the turbine 42 disposed along the longitudinal axis A. The fan 98 drives an inlet airflow into the compressor 38. The compressed inlet airflow is communicated as a pressurized core flow 44 to the combustor 40 where it is mixed with a fuel flow 74 and ignited to generate the exhaust gas flow 46. The exhaust gas flow 46 expands through the turbine 42 where energy is extracted and utilized to generate shaft power to drive an engine shaft 100. The engine shaft 100 drives the compressor 38 and the fan 98. The exhaust gas flow 46 is subsequently exhausted through a nozzle 48.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engines. Additionally, the features of this disclosure may be applied to other engine configurations utilized to generate shaft power.

A cryogenic fuel system 66 includes at least a fuel tank 68 and a fuel pump 70 to provide a liquid fuel flow 72 to the combustor 40. The example fuel system 66 is configured to provide a hydrogen based fuel such as a liquid hydrogen (LH₂). Although hydrogen is disclosed by way of example, other cryogenic, non-carbon based fuels could be utilized and are within the contemplation of this disclosure.

The fuel in the tank 68 includes features for storing a cryogenic fuel at temperatures required to maintain the fuel in a liquid phase. Temperatures required to maintain the cryogenic fuel in a liquid phase may be as low as about -412°F. In one example embodiment, the cryogenic fuel is maintained at a temperature below 0 °F. In another example embodiment, the fuel is maintained in the tank 68 at temperatures below -100 °F. The cryogenic fuel may be maintained at temperatures below about -150 °F and as low as about -435 °F.

The low temperatures of the cryogenic fuel 72 provides a source of heat absorption that is utilized in the bottoming cycle 52. The bottoming cycle 52 provides for recovering thermal energy otherwise lost as exhaust through the nozzle 48.

The example bottoming cycle 52 includes a bottoming compressor 54 that is driven by a bottoming turbine 56 though a bottoming shaft 58. A working fluid 64 is cycled within the closed circuit 62 between the bottoming compressor 54 and the bottoming turbine 56. The working fluid 64 is compressed in the bottoming compressor 54, heated within a primary heat exchanger 50 by thermal energy 45 from the exhaust gas flow 46, and then expanded through the bottoming turbine 56 to drive the bottoming shaft 58. In one disclosed example, the output shaft 58 is coupled to drive a generator 60 to produce electric power. Although the example output shaft 58 is illustrated as driving the generator 60, other accessory components of the propulsion system 25 or aircraft 20 may be coupled to and driven by the output shaft 58.

The first or primary heat exchanger 50 provides thermal communication of heat 45 from the exhaust gas flow 46 into the working fluid 64 of the bottoming cycle 52. Compressed working fluid from the bottoming compressor 54 is heated by thermal energy communicated through the primary heat exchanger 50.

A fuel/working fluid heat exchanger 78 places the working fluid 64 in thermal contact with the liquid fuel flow 72. The fuel flow 72 accepts heat from the working fluid 64 to cool the working fluid 64 prior to introduction back into the bottoming compressor 54. The liquid fuel flow 72 is vaporized prior to introduction into the combustor 28 and therefore heat transferred from the working fluid is utilized to aid in heating of the fuel. An exhaust heat exchanger 76 is disposed downstream of the first heat exchanger 50 and provides further heating and transformation into a vaporized fuel flow 74. The vaporized fuel flow 74 is injected into the combustor 40 to generate the exhaust gas flow 46. The closed circuit 62 for the working fluid provides for the location of different components of the bottoming cycle 52 to be located in different structures of the aircraft 20.

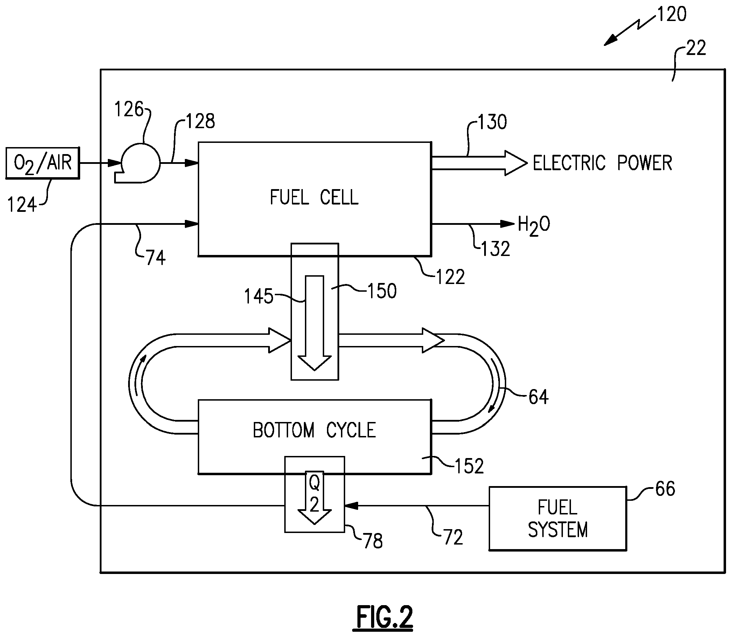

Referring to Figure 2, another example propulsion system 120 is schematically shown and includes a bottoming cycle 152 that recovers heat generated by a fuel cell 122. The fuel cell 122 generates electric power 130 from a cryogenic fuel flow 74 and a flow of oxygen 128 from an oxygen source 124. The oxygen flow 128 may be provided by a pump 126. The oxygen flow 128 may be separated from ambient air and/or be from a dedicated oxygen source. The fuel cell 122 generates electric power 130 and exhausts water 132 as a waste product.

Operation of the fuel cell 122 generates heat as schematically shown at 145. The heat 145 is communicated into the working fluid flow 64 of the bottoming cycle 152 through a fuel cell heat exchanger 150. The bottoming cycle 152 utilizes the heated working fluid 64 to generate power in the same manner as explained with regard to the propulsion system 20 illustrated in Figure 1. The fuel system 66 provides a flow of vaporized fuel 74 to the fuel cell 122. A flow of fuel in a liquid state 72 is utilized to cool the working fluid 64 in a fuel/working fluid heat exchanger 78. The fuel cell 122 may be utilized as the primary energy conversion device of the propulsion system 120. The fuel cell 122 may also be utilized in combination with the core engine 25 described in reference to Figure 1. Moreover, although a core engine 25 and the fuel cell 122 are disclosed by way of example, other energy conversion devices and systems that generate heat may be utilized and are within the scope and contemplation of this disclosure.

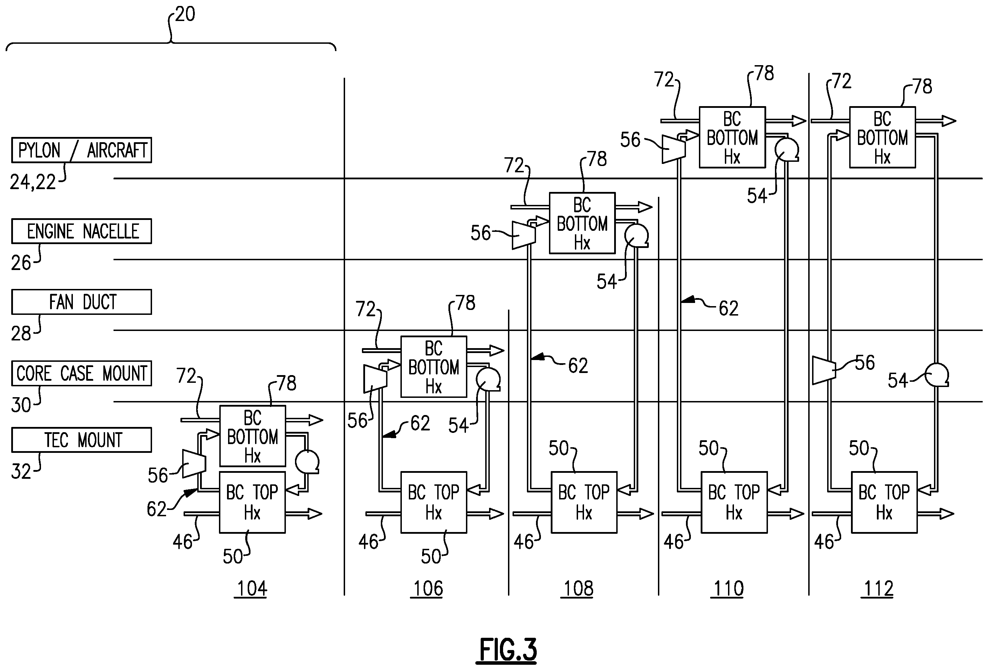

Referring to Figure 3 with continued reference to Figure 1, example locations of the heat exchangers of the bottoming cycle are illustrated schematically with reference to structures of the aircraft 20 and propulsion system 25. In one example arrangement, indicated at 104, includes the primary heat exchanger 50 and the fuel/working fluid heat exchanger 78 both arranged and mounted within the turbine exhaust case 32 (illustrated as TEC 32). The arrangement 104 provides for a relatively compact system mountable in limited space.

Another arrangement is schematically shown and indicated at 106 and includes the primary heat exchanger 50 within the turbine exhaust case 32 to be in thermal contact with the exhaust gas flow 46. However, the fuel/working fluid heat exchanger 78 need not be located in this same structure. In the example arrangement 106, the fuel/working fluid heat exchanger 78 is located at the core case mount 30. The spaced apart proximity between heat exchangers 50, 78 provides an optional arrangement to take advantage of additional space and closer proximity to the locations where the cryogenic fuel may be stored.

Another arrangement 108 is schematically shown and includes the fuel/working fluid heat exchanger 78 mounted within the engine nacelle 26. Mounting within the nacelle 26 may enable additional access to cooling flows that could be used to further cool the working fluid flow 64. In this example embodiment, the bottoming turbine 56 and bottoming compressor 54 are located in the same structure as the fuel/working fluid heat exchanger 78. The common mounting location provides for a more compact closed circuit 62.

A further arrangement is schematically shown at 110 and includes the fuel/working heat exchanger 78 mounted within the pylon 24 or the fuselage of the aircraft 20. Location of the heat exchanger 78 within the pylon 24 or engine fuselage 22 places it closer to likely locations for the cryogenic fuel tank 68. The close proximity of the heat exchanger 78 provides for communication of cooler cryogenic fuel flow substantially directly from the fuel tank.

Another arrangement is schematically shown at 112 and includes the fuel/working fluid heat exchanger 78 located in a structure different than that of the bottoming turbine 56 and the bottoming compressor 54. In the disclosed example arrangement, the bottoming turbine 56 and the bottoming compressor 54 are located on, or within the core case mount 30. The location of the bottoming turbine in the core case mount 30 provides for a location of the shaft power in closer proximity to the core engine 36. The heat exchanger 78 is located closer to the cryogenic fuel tank 68 and to additional cooling airflows spaced apart from the core engine 36.

The disclosed arrangements 104, 106, 108, 110 and 112 are all possible due to the flexibility provided by the transfer of thermal energy by the working fluid 64 between and around the various aircraft structures.

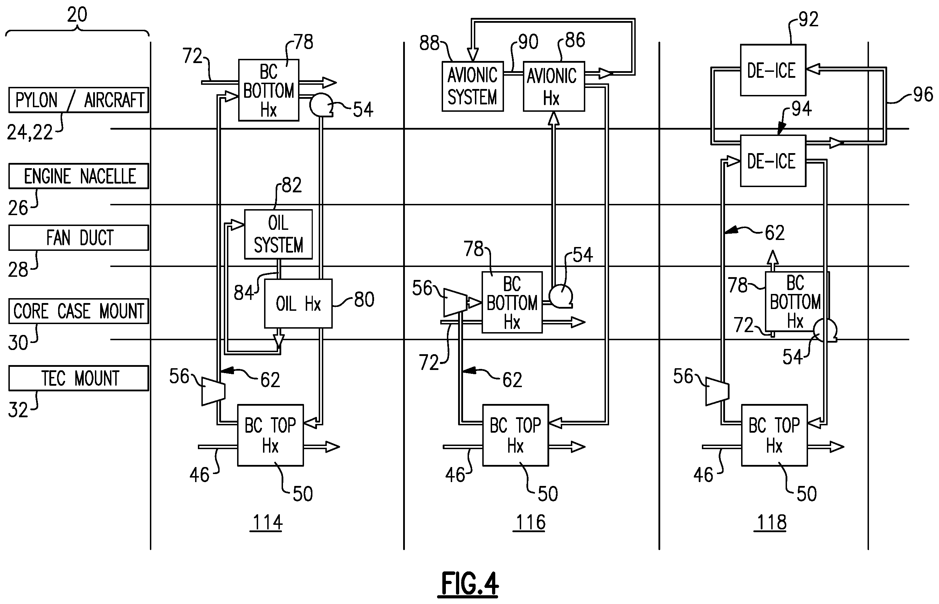

Referring to Figure 4, with continued reference to Figure 1, another group of example arrangements are schematically shown and all include other sources of thermal energy in addition to the core engine 36. The flow of working fluid 64 and the possibility of extending the closed circuit 62 throughout the various aircraft structures enables the recovery of additional heat from the other sources aboard the aircraft 20.

In one example arrangement indicated at 114, an oil heat exchanger 80 is located within the core case mount 30 and communicates thermal energy from an oil system 82 through an oil flow 84 into the working fluid 64. The heat exchanger 78 is located in the pylon or fuselage 24, 22 for cooling the working fluid with the fuel flow 72. The bottoming turbine 56 is located in the turbine exhaust case 32 with the primary heat exchanger 50. The bottoming compressor 54 is located with the fuel/working fluid heat exchanger 78. The spaced apart mounting of the bottoming turbine 56 and bottoming compressor 54 are enabled by the closed circuit 62 and the working fluid flow 64.

In another example arrangement indicated at 116, an avionics heat exchanger 86 communicates thermal energy 90 from an avionics system 88 into the working fluid 64 within the closed circuit 62. The thermal energy 90 may be communicated from the avionics by a coolant flow or as an airflow. In this example, the thermal energy 90 from the avionics system 88 is communicated to the working fluid flow 64 after the working fluid has been compressed. The bottoming compressor 54, bottoming turbine 56 and the fuel/working fluid heat exchanger 78 are all located in the same structure that is different than the structure that the avionics system 88 is located. In one example embodiment, the avionics system 88 and the avionics heat exchanger 86 are both located within the aircraft fuselage 22. The primary heat exchanger 50 is located in the turbine exhaust case 32.

Another example arrangement is indicated at 118 and includes a de-ice system 92 with a de-ice heat exchanger 94 that is located within the engine nacelle 26. The bottoming compressor 54 and the fuel/working fluid heat exchanger 78 is located in or on the core case mount 30. The bottoming turbine 56 is located in the same structure as the primary heat exchanger 50. In this example, the same structure is the turbine exhaust case mount 32. The arrangement 118 provides for communication and flow of the working fluid to spaced apart location to provides heat to the de-ice system 92. The working fluid provides heat to a heating flow 96 used in the de-ice system 92.

Although various systems are shown by way of example, other systems may be included and arranged in advantageous locations within the aircraft 20. The closed circuit 62 may be modified and arranged to communicate working fluid flow 64 to accept heat from the spaced apart systems to enable further recovery of thermal energy.

Accordingly, the example propulsion systems include a bottoming cycle that leverages the flexibility that is provided by the working fluid flow to enable advantageous location of bottoming cycle features and heat exchangers.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. An aircraft propulsion system (25) comprising:
a primary energy conversion device (36, 122) configured to use a cryogenic fuel and air to generate power and thermal energy, wherein the primary energy conversion device (36, 122) is mounted to a first structure (26) of an aircraft (20);
a bottoming cycle (52, 152) configured to circulate a working fluid (64) within a closed circuit (62) comprising a bottoming compressor section (54) and a bottoming turbine section (56), wherein the bottoming compressor section (54) is configured to compress the working fluid (64), the bottoming turbine section (56) is configured to expand the working fluid (64) therethrough to generate shaft power, and at least a portion of the bottoming cycle (52, 152) is mounted to a second structure (22, 24) of the aircraft (20) that is different from the first structure (26);
a primary heat exchanger (50, 150) configured to provide communication of thermal energy (45, 145) from the primary conversion device to the working fluid (64) of the bottoming cycle (52, 152), wherein the primary heat exchanger (50, 150) is mounted within the first structure (26) of the aircraft (20) proximate the primary energy conversion device (36, 122);
a fuel system (66) comprising a cryogenic fuel storage tank (68) and a fuel flow path (72, 74) for routing the cryogenic fuel to the primary energy conversion device (36, 122); and
a fuel/working fluid heat exchanger (78) configured to provide thermal communication between the cryogenic fuel and the working fluid (64) to cool a working fluid flow from the bottoming turbine section (56) to the bottoming compressor section (54).

2. The aircraft propulsion system (25) as recited in claim 1, wherein the primary energy conversion device comprises a gas turbine engine (36) comprising a combustor (40) configured to ignite a mixture of the cryogenic fuel and compressed air to generate an exhaust gas flow (46), and a turbine section (42) configured to expand the exhaust gas flow (46) therethrough to generate shaft power utilized to drive a propulsive fan (98), wherein the exhaust gas flow (46) is routed through the primary heat exchanger (50) for heating the working fluid (64) of the bottoming cycle (52, 152).

3. The aircraft propulsion system (25) as recited in claim 1 or 2, wherein the primary energy conversion device comprises a fuel cell (122) configured to use the cryogenic fuel (72) and air to generate electric power.

4. A power generating system for an aircraft (20) comprising:
a core engine (36) comprising a compressor (38), a combustor (40), and a turbine (42), wherein the combustor (40) is configured to ignite a mixture of a cryogenic fuel (72) and compressed air from the compressor (38) to generate an exhaust gas flow (46), the turbine (42) is configured to expand the exhaust gas flow (46) to generate shaft power, and the core engine (36) is mounted within a first structure (26) of the aircraft (20);
a bottoming cycle (52, 152) configured to circulate a working fluid (64) within a closed circuit (62) comprising a bottoming compressor section (54) and a bottoming turbine section (56), wherein the bottoming compressor section (54) is configured to compress the working fluid (64), the bottoming turbine section (56) is configured to expand the working fluid therethrough to generate shaft power, and at least a portion of the bottoming cycle (52, 152) is mounted within a second structure (22, 24) of the aircraft (20) that is different from the first structure (26);
a primary heat exchanger (50) configured to provide communication of thermal energy (45, 145) from the exhaust gas flow (46) to the working fluid (64) of the bottoming cycle (52, 152);
a fuel system (66) comprising a cryogenic fuel storage tank (68) and a fuel flow path (72, 74) for routing the cryogenic fuel to the combustor (40) of the core engine (36); and
a fuel/working fluid heat exchanger (78) configured to provide thermal communication between the cryogenic fuel and the working fluid (64) to cool a working fluid flow from the bottoming turbine section (56) to the bottoming compressor (54).

5. The aircraft propulsion system (25) or the power generation system as recited in any preceding claim, wherein the closed circuit (62) is configured to communicate the working fluid flow from the bottoming cycle (52, 152) to the primary heat exchanger (50) mounted within the first structure (26).

6. The aircraft propulsion system (25) or the power generation system as recited in any preceding claim, wherein the second structure comprises a portion of at least one of an aircraft (20) wing (34), pylon (24), or fuselage (22, 24).

7. The aircraft propulsion system (25) or the power generation system as recited in any of claims 1 to 5, wherein the second structure comprises:
an engine nacelle (26) surrounding a portion of a or the propulsion system (25); or
a portion of a fan (98) duct strut.

8. The aircraft propulsion system (25) or the power generation system as recited in any preceding claim, wherein the bottoming turbine section (56) is mounted within a structure different than that of the fuel/working fluid heat exchanger (78).

9. The aircraft propulsion system (25) or the power generation system as recited in any preceding claim, wherein the bottoming compressor section (54) and the bottoming turbine section (56) are both mounted within a structure different than that of the fuel/working fluid heat exchanger (78).

10. The aircraft propulsion system (25) or the power generation system as recited in any preceding claim, wherein the fuel system (66) is mounted within the second structure (22, 24) with the bottoming cycle (52, 152).

11. The aircraft propulsion system (25) or the power generation system as recited in any preceding claim, further comprising at least one secondary heat exchanger (80, 86, 94) configured to communicate thermal energy from at least one secondary source (82, 88, 92) to the working fluid (64) and the secondary heat exchanger (76, 80, 86, 94) is mounted within a third structure (22, 24, 26, 30) different than both the first structure and the second structure.

12. The aircraft propulsion system (25) or the power generation system as recited in claim 1, wherein:
a portion of the working fluid (64) is in thermal communication with a cooling flow separate from the cryogenic fuel in a supplemental heat exchanger ; or
a portion of the closed circuit (62) communicates working fluid (64) with a cooling flow separate from the cryogenic fuel in a supplemental heat exchanger.

13. A method of assembling an aircraft propulsion system (25) comprising:
assembling a primary energy conversion device (36, 122) that uses a cryogenic fuel (72) and air to generate power and thermal energy (45, 145) to a first structure (26) of an aircraft (20);
mounting at least a portion of a bottoming cycle (52, 152) into a second structure (22, 24) of the aircraft (20) that is different from the first structure (26), wherein the bottoming cycle (52, 152) includes a working fluid (64) that is circulated within a closed circuit (62) comprising a bottoming compressor section (54) and a bottoming turbine section (56), wherein the working fluid is compressed in the bottoming compressor section and expanded through the bottoming turbine section (56) to generate shaft power;
mounting a primary heat exchanger (50) proximate to the primary energy conversion device (36, 122) within the first structure (26), wherein the primary heat exchanger (50) provides communication of thermal energy (45, 145) from the primary conversion device (36, 122) to the working fluid (64) of the bottoming cycle (52, 152), and the closed circuit (62) extends between the first structure (26) and the second structure (22, 24);
assembling a fuel system (66) comprising a cryogenic fuel storage tank (68) and a fuel flow path (72, 74) for routing the cryogenic fuel to the energy conversion device (36, 122); and
mounting a fuel/working fluid heat exchanger (78) to provide thermal communication between the cryogenic fuel and the working fluid (64) to cool a working fluid flow from the bottoming turbine section (56) to the bottoming compressor section (54).

14. The method as recited in claim 13, further comprising mounting at least one of the bottoming turbine section (56) and the bottoming compressor section (54) to an aircraft (20) structure different than the structure in which the fuel/working fluid heat exchanger (78) is mounted.

15. The method as recited in claim 13 or 14, further comprising mounting a secondary heat exchanger (80, 86, 94) to a third structure, wherein the secondary heat exchanger (80, 86, 94) communicates thermal energy from a secondary source (82, 88, 92) into the working fluid (64).
